# EUROPEAN PATENT APPLICATION

(11) **EP 4 366 181 A1**
(43) Date of publication of application: **08.05.2024**
(21) Application number: 22205873.7
(22) Date of filing: 07.11.2022
(51) Int. Cl.: H04B 7/0408, H04B 7/08, H04W 72/044

(54) **BEAM ALIGNMENT**

(71) Applicant: Nokia Technologies Oy, 02610 Espoo (FI)
(72) Inventor: SVENDSEN, Simon, 9000 Aalborg (DK); CAPORAL DEL BARRIO, Samantha, 9000 Aalborg (DK)
(74) Representative: Whiting, Gary

(57) **Abstract**

Example embodiments may relate to an apparatus, method and/or computer program for beam alignment. The method may comprise splitting an antenna system of a user equipment into a wide beam portion and a narrow beam portion. The method may also comprise receiving, at the user equipment from a network node, a first set of downlink reference signals. The wide beam portion of the antenna system may receive the first set of downlink reference signals. The method may also comprise controlling the narrow beam portion of the antenna system to scan through various angular directions to search for a second set of downlink reference signals. The method may involve receiving, at the user equipment from the network node, the second set of downlink reference signals. The narrow beam portion of the antenna system may receive the second set of downlink reference signals.

## Description

### Field

Example embodiments may relate to an apparatus, method and/or computer program for managing beam alignment.

### Background

Communication systems enable communication between two or more nodes or devices, such as fixed or mobile communication devices. Signals can be carried on wireless carriers.

An example of a cellular communication system is an architecture that is being standardized by the 3rd Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations, network nodes or access points, which are referred to as enhanced Node AP or Evolved Node B (eNBs), provide wireless access within a coverage area or cell. In LTE, mobile devices, or mobile stations are referred to as user equipment (UE). LTE has included a number of improvements or developments.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT), and may offer new types of mission-critical services. Ultra-reliable and low-latency communications (URLLC) devices may require high reliability and very low latency.

UE devices may comprise a number of beams that can be used for communications with base stations. Similarly, a network node may comprise a number of reference signals that can be used for communications with user devices. There remains a need for developments relating to the selection of reference signals for communications between UE devices and base stations to provide optimum signal strength.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising: means for splitting an antenna system of a user equipment into a wide beam portion and a narrow beam portion; means for receiving, at the user equipment from a network node, a first set of downlink reference signals, wherein the wide beam portion of the antenna system receives the first set of downlink reference signals; means for controlling the narrow beam portion of the antenna system to scan through various angular directions to search for a second set of downlink reference signals; means for receiving, at the user equipment from the network node, the second set of downlink reference signals, wherein the narrow beam portion of the antenna system receives the second set of downlink reference signals.

The antenna system may comprise an antenna array comprising a plurality of antenna elements. The wide beam portion of the antenna system may comprise a single element of the antenna array. The narrow beam portion of the antenna system may comprise all remaining elements of the antenna array.

The apparatus may further comprise means for activating the single element of the antenna array to receive the first set of downlink reference signals and means for activating all remaining elements of the array with phase shifters to receive the second set downlink reference signals.

The first set of downlink reference signals may be received by the wide beam portion of the antenna system simultaneously to the narrow beam portion of the antenna system scanning through the different angular directions to find the second set of reference signals.

The apparatus may further comprise means for receiving and decoding a physical downlink control channel of the first set of downlink reference signals.

The apparatus may further comprise means for means for receiving and decoding a physical downlink control channel of the second set of downlink reference signals and means for measuring and storing a received power of the second set of downlink reference signals.

The apparatus may further comprise means for determining an optimum beam alignment based on the measured and stored received power of the second set of downlink reference signals.

The apparatus may further comprise means for determining whether to split the antenna system into the wide beam portion and the narrow beam portion, comprising: means for performing measurements on downlink reference signals received by a narrow beam configuration of the antenna system to determine a parameter; and means for determining whether the parameter meets a predetermined threshold value.

The parameter may comprise a channel quality indicator and/or a power headroom level.

The channel quality indicator may be related to a signal to noise ratio of the received downlink reference signals.

The power headroom level may be related to power available power available in transmission of candidate uplink signals.

The network node may be configured into a single transmission configuration indicator, TCI, state such that the first set of downlink reference signals and the second set of downlink reference signals originate from a single primary reference signal. The first set of downlink reference signals and the second set of downlink reference signals may be received at the user equipment from a single or multiple different angular directions.

The network node may be configured into a dual TCI state such that the first set of downlink reference signals and the second set of downlink reference signals originate from different primary reference signals. The first set of downlink reference signals and the second set of downlink reference signals may be received at the user equipment from a single or multiple different angular directions.

The apparatus is may be a user device. The network nodes may be radio access network, RAN, base stations.

According to a second aspect, there is described a method comprising: splitting an antenna system of a user equipment into a wide beam portion and a narrow beam portion; receiving, at the user equipment from a network node, a first set of downlink reference signals, wherein the wide beam portion of the antenna system receives the first set of downlink reference signals; controlling the narrow beam portion of the antenna system to scan through various angular directions to search for a second set of downlink reference signals; receiving, at the user equipment from the network node, the second set of downlink reference signals, wherein the narrow beam portion of the antenna system receives the second set of downlink reference signals.

The antenna system may comprise an antenna array comprising a plurality of antenna elements. The wide beam portion of the antenna system may comprise a single element of the antenna array. The narrow beam portion of the antenna system may comprise all remaining elements of the antenna array.

The method may further comprise activating the single element of the antenna array to receive the first set of downlink reference signals and means for activating all remaining elements of the array with phase shifters to receive the second set downlink reference signals.

The first set of downlink reference signals may be received by the wide beam portion of the antenna system simultaneously to the narrow beam portion of the antenna system scanning through the different angular directions to find the second set of reference signals.

The method may further comprise receiving and decoding a physical downlink control channel of the first set of downlink reference signals.

The method may further comprise means for receiving and decoding a physical downlink control channel of the second set of downlink reference signals and measuring and storing a received power of the second set of downlink reference signals.

The method may further comprise determining an optimum beam alignment based on the measured and stored received power of the second set of downlink reference signals.

The method may further comprise determining whether to split the antenna system into the wide beam portion and the narrow beam portion, comprising: performing measurements on downlink reference signals received by a narrow beam configuration of the antenna system to determine a parameter; and determining whether the parameter meets a predetermined threshold value.

The parameter may comprise a channel quality indicator and/or a power headroom level.

The channel quality indicator may be related to a signal to noise ratio of the received downlink reference signals.

The power headroom level may be related to power available power available in transmission of candidate uplink signals.

The network node may be configured into a single transmission configuration indicator, TCI, state such that the first set of downlink reference signals and the second set of downlink reference signals originate from a single primary reference signal. The first set of downlink reference signals and the second set of downlink reference signals may be received at the user equipment from a single or multiple different angular directions.

The network node may be configured into a dual TCI state such that the first set of downlink reference signals and the second set of downlink reference signals originate from different primary reference signals. The first set of downlink reference signals and the second set of downlink reference signals may be received at the user equipment from a single or multiple different angular directions.

The apparatus is may be a user device. The network nodes may be radio access network, RAN, base stations.

According to a third aspect, there is provided a computer program product comprising a set of instructions which, when executed on an apparatus, is configured to cause the apparatus to split an antenna system of a user equipment into a wide beam portion and a narrow beam portion; receive, at the user equipment from a network node, a first set of downlink reference signals, wherein the wide beam portion of the antenna system receives the first set of downlink reference signals; control the narrow beam portion of the antenna system to scan through various angular directions to search for a second set of downlink reference signals; receive, at the user equipment from the network node, the second set of downlink reference signals, wherein the narrow beam portion of the antenna system receives the second set of downlink reference signals

According to a fourth aspect, there is provided a non-transitory computer readable medium comprising program instructions stored thereon for performing a method, comprising: splitting an antenna system of a user equipment into a wide beam portion and a narrow beam portion; receiving, at the user equipment from a network node, a first set of downlink reference signals, wherein the wide beam portion of the antenna system receives the first set of downlink reference signals; controlling the narrow beam portion of the antenna system to scan through various angular directions to search for a second set of downlink reference signals; receiving, at the user equipment from the network node, the second set of downlink reference signals, wherein the narrow beam portion of the antenna system receives the second set of downlink reference signals.

The program instructions of the fourth aspect may also perform operations according to any preceding method definition of the second aspect.

### Brief Description of the Drawings

Example embodiments will now be described by way of non-limiting example, with reference to the accompanying drawings, in which:
Fig. 1 shows, by way of example, a network architecture of a communication system;
Fig. 2 shows, by way of example, single TCI-State operation and dual TCI-State operation;
Fig. 3 shows, by way of example, a flowchart of a method;
Fig. 4 shows, by way of example, a power delay profile;
Fig. 5 shows, by way of example, 4-Layer UE utilizing PDCCH to beam align toward a primary and a secondary link;
Fig. 6 shows, by way of example, a flow chart of a decision making process;
Fig. 7 shows, by way of example, a further flow chart of a decision making process;
Fig. 8 shows, by way of example, 4-Layer UE utilizing PDCCH to beam align toward a primary link alone;
Fig. 9 shows, by way of example, a block diagram of an apparatus.

### Detailed Description

Example embodiments may relate to an apparatus, method and/or computer program for managing beam alignment.

A user equipment (UE) may indicate to an antenna system whether to divide itself into a narrow beam portion and a wide beam portion. The wide beam portion of the antenna system is used to receive primary downlink reference signals (DL RS) from a network node of a network. Simultaneously a narrow beam portion of the antenna system is used to scan through various angular directions to search for secondary DL RS signal. The narrow beam portion is configured to receive and perform measurements on the secondary set of DL RS signals.

The UE may indicate to a network over which it will communicate wireless signals, for example to a network node of the network, whether a preferred secondary DL RS signal is detected. This allows for improved beam alignment by continuously searching for stronger DL RS signals.

The UE also provides a system for determining whether it is appropriate to search for secondary DL RS signals based on detected parameters in the system. This ensures that the UE is in a sufficiently capable state to search for secondary DL RS signals without compromising the integrity of the system.

Example embodiments relate to an apparatus, method and/or computer program in which a UE may divide an antenna system into a narrow beam configuration and wide beam configuration.

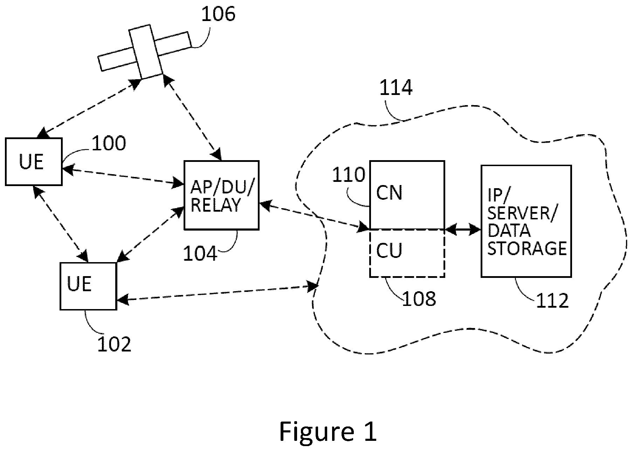

Figure 1 shows, by way of an example, a network architecture of a communication system which is a radio access network (RAN). In the following, different exemplifying embodiments will be described using, as an example of an access architecture to which embodiments may be applied, a radio access architecture based on long term evolution advanced (LTE Advanced, LTE-A) or new radio (NR), also known as fifth generation (5G), without restricting the embodiments to such an architecture, however. Embodiments may also be applied to other kinds of communications networks having suitable means by adjusting parameters and procedures appropriately. Some examples of other options for suitable systems are the universal mobile telecommunications system = radio access network, long term evolution (LTE), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

Figure 1 shows first and second user devices 100, 102 configured to be in a wireless connection on one or more communication channels in a cell with a network node, such as a network node 104 providing a cell. The physical link from a user device, e.g. the first user device 100, to the network node 104 is called the uplink (UL) or reverse link and the physical link from the network node to the user device is called the downlink (DL) or forward link. It should be appreciated that network nodes and their functionalities may be implemented by using any node, host, server or access point entity suitable for such a usage. A communications system typically comprises more than one network node in which case the network nodes may also be configured to communicate with one another over links, wired or wireless, designed for the purpose. These links may be used for signaling purposes. A network node is a computing device configured to control the radio resources of the communication system it is coupled to. A network node may also be referred to as a TRP, base station (BS), an access point or any other type of interfacing device including a relay station capable of operating in a wireless environment. A network node may include or is coupled to transceivers. From the transceivers of the network node 104, a connection may be provided to an antenna unit that establishes bidirectional radio links to user devices, such as the first and second user devices 100, 102. The antenna unit may comprise a plurality of antennas or antenna elements, for example arranged as an antenna array. The network node 104 may further be connected to a core network 110.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant, handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

5G enables using multiple input and multiple output technology at both the UE and network node side, many more base stations or nodes than the LTE. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

An edge cloud may be brought into radio access networks (RANs). Using an edge cloud may mean access node operations to be carried out, at least partly, in a server, host or node operationally coupled to a remote radio head or base station comprising radio parts. It is also possible that node operations will be distributed among a plurality of servers, nodes or hosts. Applications of cloud RAN architecture enables RAN real time functions being carried out at the RAN side (in a distributed unit, DU 104) and non-real time functions being carried out in a centralized manner (in a centralized unit, CU 108).

Beam management is applied during a random access channel (RACH) procedure, when the UE forms the initial connection with the network, and while the UE is in a connected state. In a connected state, transmitting beams and receiving beams may be refined.

Beam management may define a set of functionalities to assist the UE to set its reception (Rx) and transmission (Tx) beams for DL receptions and UL transmissions, respectively. The functionalities can be categorized roughly according to four groups.

In beam indication, the UE is assisted to set its Rx and Tx beam properly for the reception of the DL and the transmission of the UL, respectively.

Beam acquisition, measurements and reporting refer to procedures for providing the network node knowledge about feasible DL and UL beams for the UE.

Beam recovery refers to rapid link reconfiguration against sudden blockages, e.g. fast realignment of network node and UE beams.

Beam tracking and refinement refer to procedures for measuring and aligning network node and UE side beams, as well as to refine network node and UE side beams. The approach disclosed herein provides an improved method of beam alignment for network node and UE primary and secondary beams.

Regarding DL beam management and especially for beam acquisition, measurements and reporting, different beam management procedures, referred to as P-i, P-2 and P-3, are supported within one or multiple TRPs of the serving cell.

P-1 may be used to enable UE measurement on different TRP Tx beams to support selection of TRP Tx beams/UE Rx beam(s). For beamforming at a TRP, it typically includes an intra/inter-TRP Tx beam sweep from a set of different beams. For beamforming at a UE, it typically includes a UE Rx beam sweep from a set of different beams.

P-2 is used to enable UE measurement on different TRP Tx beams to possibly change inter/intra-TRP Tx beam(s). Measurements may be performed from a possibly smaller set of beams for beam refinement than in P-1. P-2 maybe a special case of P-1.

P-3 is used to enable UE measurement on the same TRP Tx beam to change a UE Rx beam in the case UE uses beamforming.

Regarding DL beam indication, a quasi-colocation (QCL) indication functionality has been defined. The UE may be configured with, or the UE implicitly determines, a source reference signal (RS) that the UE has received and measured earlier and which defines how to set the Rx beam for the reception of the DL physical signal or channel to be received. To provide the UE with QCL characteristics for the target signal, that is the signal to be received, a transmission coordination indication (TCI) framework has been defined. By using the TCI framework, the UE may be configured with TCI state(s) to provide the UE with source RS(s) for determining QCL characteristics. Each TCI state includes one or two source RSs that provide UE QCL TypeA, TypeB, TypeC and/or TypeD parameters. Different types provide the parameters as follows:
QCL-TypeA: {Doppler shift, Doppler spread, average delay, delay spread}
QCL-TypeB: {Doppler shift, Doppler spread}
QCL-TypeC: {Doppler shift, average delay}
QCL-TypeD: {Spatial Rx parameter}

In the UL, the UE is provided a parameter called spatial relation information, providing a spatial source RS based on which the UE determines the UL transmit beam. The spatial source RS can be DL RS (synchronization signal block (SSB) or channel state information reference signal (CSI-RS)) or UL RS (such as sounding reference signal (SRS)). In case of DL RS as a spatial source RS, the UE sets its transmit beam to be the same or similar as was its receive beam to receive the spatial source RS. In the case of UL RS as a spatial source RS, the UE sets its transmit beam to be the same or similar as was its transmit beam to transmit the spatial source RS. The spatial source RS may also be the QCL-TypeD RS provided to the UE in a certain TCI state. For each physical UL control channel (PUCCH) and SRS resource, network node may provide explicitly a spatial source or TCI state while for physical UL shared channel (PUSCH) indirect indication may be provided.

PUSCH may be scheduled using DL control information (DCI) format 0_0 and the spatial source may be the same as with a certain PUCCH resource.

PUSCH may be scheduled using DCI format 0_1 and the spatial source may be the same as an indicated SRS resource(s). For example, the spatial source maybe one SRS resource indicated in a codebook based transmission scheme, or one or multiple SRS resources indicated in a non-codebook based transmission scheme.

Rel-16 introduced a default spatial relation for dedicated PUCCH/SRS (except SRS with usage = 'beamManagement' and SRS with usage = 'nonCodeBook' and configured with associated CSI-RS). If spatial relation is not configured in FR2, the UE may determine the spatial relation as follows:
- in the case when control resource set(s) (CORESET) are configured on the component carrier (CC), the spatial relation is the TCI state / QCL assumption of the CORESET with the lowest index or identity (ID); or
- in the case when any CORESETs are not configured on the CC, the spatial relation may be the activated TCI state with the lowest index or ID applicable to PDSCH in the active DL bandwidth part (DL-BWP) of the CC.

CORESET defines time and frequency resources on which the physical DL control channel (PDCCH) candidates may be transmitted to the UE.

Furthermore, Rel-16 introduced a default spatial relation for PUSCH scheduled by DCI format 0_0_o where UE determines spatial relation as follows:
- when there is no PUCCH, resources configured on the active UL BWP CC: the default spatial relation is the TCI state / QCL assumption of the CORESET with the lowest ID. The default pathloss RS is the QCL-TypeD RS of the same TCI state / QCL assumption of the CORESET with the lowest ID;
- when there is no PUCCH resources configured on the active UL BWP CC in FR2 and in RRC-connected mode: the default spatial relation is the TCI state / QCL assumption of the CORESET with the lowest ID. The default pathloss RS is the QCL-TypeD RS of the same TCI state / QCL assumption of the CORESET with the lowest ID.

A TCI-state defines a QCL source and QCL type for a target reference signal and hence indicates a transmission configuration which includes QCL-relationships between the DL RSs in one RS set. DL and UL signals characterized by the TCI are received only by a subset of panels used by the UE and these panels receiving RSs characterized by TCI are active panels used in the actual DL and UL transmission. The RANi specification is also describing the RS grouping concept. DL signals received by the UE are said to be part of the same group if they are received by the same spatial filter (received beam) at the UE.

RANi has been working on improving the DCI based TCI state switching. The work involves enabling the use of DCI based TCI state switch for one or more channels simultaneously. As part of this work RANi is discussing introducing common beam management and unified beam management. Common and unified beam management enables the network to change the TCI state of more than 1 channel using one TCI command. Hence, with a single TCI state switch command the TCI state is changed for more than one channel. The channels can be either DL and/or UL channels including PDCCH, PDSCH, PUCCH and PUSCH. The work also includes enabling change of the PDCCH TCI state by use of DCI.

Within the unified TCI state framework, RANi is introducing the possibility to change both UL and DL independently or simultaneously. We assume that if the TCI state switch only includes switch of one TCI state (either UL or DL) existing TCI state switch delay requirements may still be readily re-usable. RAN4 discusses if new TCI state switch delay requirements would be needed in case both UL and DL TCI state is switched simultaneously.

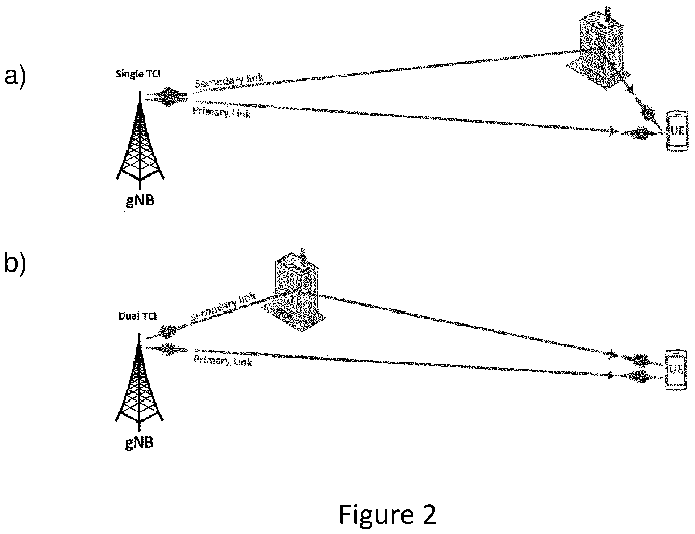

An FR2 4-layer connection can be configured by network with a single TCI-State or with 2 individual TCI-States (that are not QCL type D), depending on the selected beam configuration at the network node. Figure 2a shows a single-TCI scenario and Figure 2b shows a dual-TCI scenario.

In a single-TCI state the first set of DL RF signals and the second set of DL RF signals originate from a single primary reference signal (i.e. as shown in Figure 2a). The first set of DL RF signals and the second set of DL RF signals are received at the user equipment from a single or multiple different angular directions.

In a dual-TCI state the first set of DL RF signals and the second set of DL RF signals originate from different reference signals from the network node (see figure 2B). The first set of DL RF signals and the second set of DL RF signals are received at the user equipment from a single or multiple different angular directions. In dual-TCI scenario, the UE maybe configured with s-DCI or m-DCI, depending on the TRP's cooperation.

Beam refinement implementation at the UE (P3) is not directly part of the current 3GPP specifications (Rel. 17), as this is considered UE implementation behavior, and the dedicated specified reference signal for P3 is aperiodic CSI-RS with repetition "ON". The scheduling of this reference signal is fully controlled by the network node and the repetition feature is not mandatory, such that a UE might not be allocated aperiodic CSI-RS with repetition "ON" when needed e.g. due to load and/or resource overhead. The overhead of using aperiodic CSI-RS with repetition "ON" can be quite large, which is one reason the repetition feature is not mandatory, as the network node in principle will have to send that signal regularly for all connected UEs.

This resource overhead may be doubled for UEs supporting 4-layer DL and/or UL, as two different links must be monitored and maintained, to ensure optimal performance.

The required resource allocation of aperiodic CSI-RS with repetition "ON" for 4-Layer UE beam alignment is explained below for the cases of single and dual TCI-State configuration:
Dual TCI-State configuration: Each TCI-State must allocate its own set of aperiodic CSI-RS with repetition "ON", which in theory will result in a doubling of the resource overhead. Therefore, there is a desire in dual TCI-state configuration to align both UE narrow beams to receive 4 layers with low correlation while minimizing resource utilization of the needed reference signals.

Single TCI-State configuration: Only a single TCI-State must be allocated with aperiodic CSI-RS with repetition "ON", so in theory the same as for a 2-Layer connection. However, since the UE will have to maintain two aligned beams, it will require an increased periodicity of the aperiodic CSI-RS with repetition "ON", also leading to doubling the resources spent on UE beam refinement. Therefore, there is a desire in single TCI-state configuration to reduce resource overhead for UE beam refinement, i.e. minimize or avoid scheduling aperiodic CSI-RS with repetition "ON".

The UE may indicate to a network over which it will communicate wireless signals, for example to a network node of the network, whether a preferred secondary DL RS signal is detected. This allows for improved beam alignment by continuously searching for stronger DL RS signals.

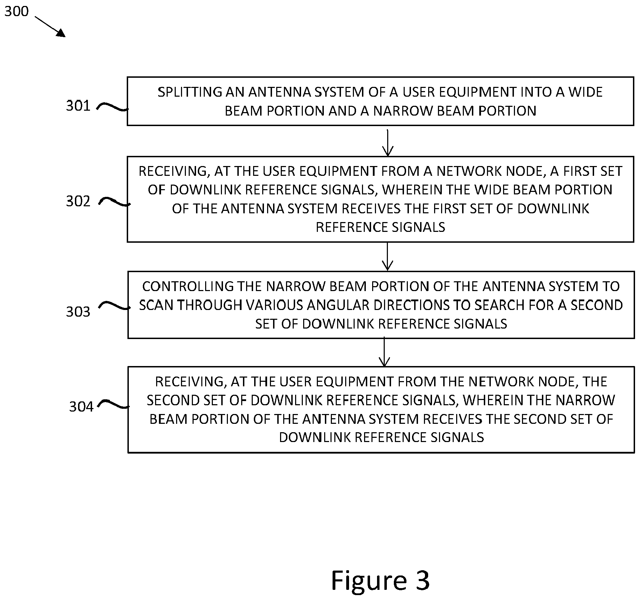

Figure 3 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 300 may comprise a first operation 301 of splitting an antenna system of a user equipment into a wide beam portion and a narrow beam portion.

The method 300 may comprise a second operation 302 of receiving, at the user equipment from a network node, a first set of DL RF signals. The wide beam portion of the antenna system receives the first set of DL RF signals.

The method 300 may comprise a third operation 303 of controlling the narrow beam portion of the antenna system to scan through various angular directions to search for a second set of DL RF signals.

The method 300 may comprise a fourth operation 304 of receiving, at the user equipment from the network node, the second set of DL RF signals. The narrow beam portion of the antenna system receives the second set of DL RF signals

The method may be performed by an apparatus such as a UE 100 of Figure 1, e.g. a mobile phone or a smart phone, or by a control device configured to control the functioning thereof, when installed therein. The UE 100 may be equipped with the antenna system. The antenna system may comprise an antenna array comprising a plurality of antenna elements or other known types of antenna. The antenna system may be configured to receive DL reference signals. Such antenna configurations can dynamically form and steer narrow transmission/reception beams, in a process known as UE-specific beamforming. Active antenna configurations can be used both at the network nodes and at the UE 100 to further enhance the beamforming potential. More than one beam can be received by each antenna array.

The antenna system may be configured to receive signals using the wide beam configuring. The same antenna system may be configured to receive signals using the narrow beam configuration.

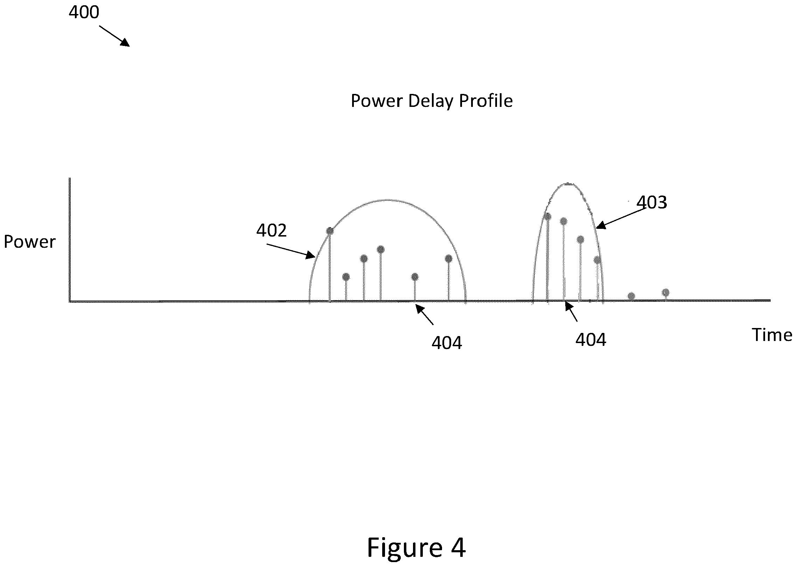

Figure 4 represents the difference between a wide beam DL RF signal and a narrow beam DL RF signal.

A wide beam configuration, otherwise known a broad beam configuration, allows a wide beam (broad beam) DL signal to be received by the UE 100. The wide beam configuration can be formed by configuring an antenna array in several ways. One method is to configure the antenna array to receive wide beam DL signals 402, for example by using only a single element of the antenna array to receive the DL signals. A typical behaviour of the UE 100 is to measure with a wide beam 402 to maximize spherical coverage. In such cases, the UE 100 may measure a power delay profile (PDP) of a wide beam DL signal 402 as represented in Figure 4.

As shown in Figure 4, a wide beam, as received, may cover the full range of DL signals received at the UE 100 including all multipath components, generally indicated by reference numeral 404. Due to signal reflections, and different times of arrival, there is a spread of when the DL signals are received from each network node, resulting in a spread of the multipath components 404 received at the UE 100. The wide beam 402 covers the full spread of multipath components 404 (i.e. the full signal) received at the UE 100 by the antenna system.

A narrow beam configuration (the term meaning narrow relative to the wide beam configuration) allows a narrow beam DL signal to be received by the UE 100. The wide beam configuration is capable of receiving multiple DL signals at once, whereas the narrow beam configuration is capable of receiving relatively less DL signals at once compared to the wide beam configuration. Where the antenna system is an antenna array, the narrow beam configuration can be generated by activating all elements of the array with phase shifters. If one element of the antenna array is being used to receive a wide beam 402, then all remaining elements of the may be activated to use the wide beam 403. Therefore, the wide beam portion of the antenna system may comprise a single element of the antenna array and the narrow beam portion of the antenna system may comprise all remaining elements of the antenna array.

As noted from Figure 4, the received narrow beam signals 403 cover only a proportion of the multipath components 404 of the full signals, which are those received earliest by the antenna system of the UE 100. Multipath components 404 which do not reach the antenna system of the UE 100 within a certain amount of time are not included in the received narrow beam signals 403. The excluded multipath components 404 are not considered as a part of the narrow beam.

As will be seen from Figure 4, the received wide beam signal 402 has relatively wider time-domain coverage than the received narrow beam signal 403. This is exemplified by the differences in the width of the wide beam UE antenna radiation pattern 402 compared with the width of the narrow beam UE antenna radiation pattern 403. The term wide beam configuration is herein used to denote when the antenna system is configured to receive a signal with a wide spatial filter. The term narrow beam configuration is herein used to denote when the antenna system is configured to receive a signal with a narrow spatial filter e.g. formed with all antenna elements active with equal phase shift between the elements.

The method 300 may further comprise activating the single element of the antenna array to receive the first set of DL RF signals and activating all remaining elements of the array with phase shifters to receive the second set DL RF signals. The first set of DL RF signals may therefore be received by the wide beam portion of the antenna system simultaneously to the narrow beam portion of the antenna system scanning through the different angular directions to find the second set of reference signals. This provides an efficient way of scanning through the secondary set of DL RF signals whilst maintaining connection to the first set of DL RF signals.

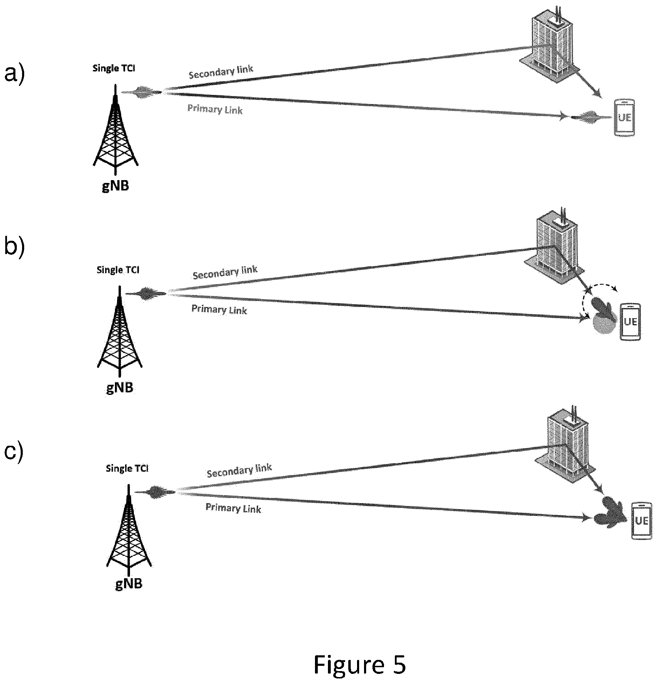

Figure 5a illustrates a UE connected and beam-aligned to a network node using the best primary link. The environment supports a secondary link, arriving from a different angular direction at the UE, which can be used for utilizing all 4-Layers at the UE. However, the UE might not be aware that this second link exists, unless the network node is scheduling sufficient aperiodic CSI-RS with repetition "ON" for the UE to scan the full angular space of the panel (i.e. all supported narrow beams). However scanning this way increases the number of allocated aperiodic CSI-RS with repetition "ON" and thereby also the resource overhead.

Figure 5b shows how the UE may be configured to use a single element wide beam for a first set of DL-Layers (wide beam configuration) to receive and decode the PDCCH message. The UE will configure the remaining elements of the panel with a second set of DL-Layers (narrow beam configuration) with a narrow beam in a preselected angular direction. The UE will keep using the static single element broad beam to receive and decode the PDCCH, while at the same time configuring a dynamic narrow beam in different angular directions. This will enable the UE to gradually monitor the full angular space for the panel to locate and maintain possible alternative links for 4-Layer operation and also maintain its primary link. This provides the advantage of scanning the different angular direction without any use of aperiodic CSI-RS with repetition "ON" therefore minimizing resource overhead dedicated to beam alignment, hence increasing maximum achievable throughput by increasing the PDSCH scheduling opportunities.

Figure 5c shows the outcome of the proposed method which is the UE fully aligned to the primary and secondary links utilizing a split panel configuration. The periodic PDCCH transmissions in common TCI framework for performing UE Rx beam alignment, towards the primary and/or secondary links while maintaining the optimal PDSCH link connection, independent on DL Layer configuration or number of TCI-States, instead of using aperiodic CSI-RS with repetition "ON" and interrupt data scheduling.

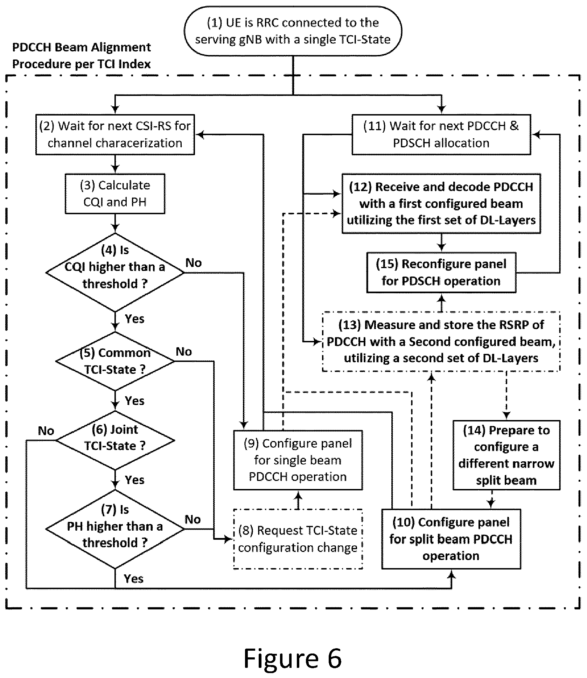

The procedure for utilizing PDCCH for beam alignment is illustrated in the flow-chart of Figure 6 for a single-DCI operation and single-TCI state index received on one UE panel.

According to Step (1) the UE is connected to the network node with a single TCI-State. Next, according to Step (2) the UE will wait for the next CSI-RS for channel characterization.

Prior to the splitting of an antenna system of a user equipment into a wide beam portion and a narrow beam portion, the UE will have to first ensure that it will still be able to receive and decode the PDCCH when entering split panel operation with a static single element broad beam, as that beam configuration will have reduced antenna gain.

At Step (3) the UE will derive the CQI and PH for the current channel conditions. The current channel conditions may include an assessment of Channel Quality Indicator (CQI) level and/or Power Headroom (PH) level. A threshold will be define e.g. a predefined Channel Quality Indicator (CQI) level and/or Power Headroom (PH) level guaranteeing successful reception of PDCCH even with broad beam (lower gain than narrow beam) and then only enter the split panel beam alignment operation when the signal conditions are at an acceptable level. At step (4) it will be determined whether the the parameter meets a predetermined threshold value.

The predetermined criteria may involve testing the parameter against a threshold value. For example, if the parameter is above the threshold value, then the parameter may be determined to meet the predetermined criteria. If the parameter is at or below the threshold value, then the parameter may be determined not to meet the predetermined criteria.

If the parameter does not meet the predetermined threshold value then, according to Step (9) the panel will be configured for single beam operation.

If the parameter does meet the predetermined threshold value then, optionally, at Step (5), a test for whether the current TCI-State is common may be applied. The test for whether the current TCI-State is common checks for an RRC configuration to determine whether it is common. This is to ensure that the used beam for PDCCH is known, i.e. that same as for PDSCH. If the TCI-state is not common then a request for TCI-State configuration change may be performed (see Step (8)). During this request the UE indicates to network that common TCI configuration is required to perform UE beam alignment during PDCCH scheduling.

If the TCI-state is common then, then at Step (6) a joint TCI-state test may be performed. The test for whether the current TCI-State is joint checks for an RRC configuration to determine whether it is joint. This TCI state may require the UE to use the same beam for UL as for DL. If there is no joint TCI state then, the panel may be configured for split beam operation (see Step (10)).

If there is a joint TCI state then, according to Step (7) it is determined whether the derived PH higher than a threshold. If the PH is not higher than a threshold, then a request for TCI-State configuration change is also performed (see Step (8)). Subsequently the panel may be configured into single beam operation only for PDCCG (see Step (9)). The previous steps of the tests maybe repeated until the criteria for split beam PDCCH operation are met.

It is noted, that not all of the test of Steps (3), (4), (5), (6) and (7) are necessarily required as a part of the test for the allowance of split beam operation. Indeed, only one or variations combinations of each of the steps may be applied, depending on the configuration of the system used. The skilled person would recognise, for example, that only the CQI and PH tests may be required or that only the common and joint TCI tests may be required necessary, for example, when known system parameters are already present in the setup of the system. Therefore, any single element of combination of Steps (3), (4), (5), (6) and (7) may be applied.

According to Step (11) the UE may, optionally, wait for the next PDCCH & PDSCH allocation. According to Step (12) the UE may receive and decode the PDCCH using a first set of DL-Layers configured with a static single element broad beam. The UE must make sure it can decode the PDCCH using the wide split-beam configuration, since receiving and decoding the PDCCH might not be possible using the narrow split-beam, as it might be configured for an angular direction, where it will not receive a PDCCH signal.

Subsequently the UE will measure and store the received signal received power, RSRP, value of the PDCCH using a second set of DL-Layers configured with a dynamic multiple element narrow beam (see Step (13)). The RSRP (e.g. Signal-Noise Ratio, SNR, Signal to Interference, SINR, and Noise Ratio and Received Signal Strength Indicator, RSSI) are stored for each individual narrow beam sweep configuration to determine, which narrow beam is the best beam for that reference signal. Then a second and different dynamic narrow beam may be selected and prepared for next PDCCH split beam operation (see Step (14)) based on the measured RSRP. Finally, the panel is reconfigured for PDSCH operation (see Step (10)). This could be single beam operation for 2-Layers configuration or split beam operation for 4-Layer configuration. This continuous process ensures an optimal narrow split beam.

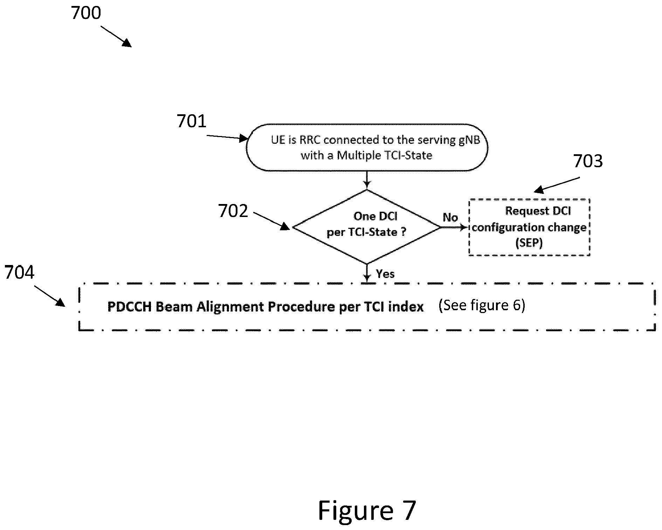

If the UE is configured with multiple DCI- and multiple TCI-states for 4-layer DL MIMO operation, it will follow the flow chart described in Figure 7, where each DCI/TCI combination are tracked in parallel, using the flow-chart described in Figure 4 for a single DCI/TCI-state. Firstly, according to step 701, it is determined whether the UE is connected to the network node with a multiple TCI-State. Subsequently, according to step 702, it may be determined whether there is one DCI configured per TCI-State. If there is not one DCI configured per TCI-state, then according to step 703, the system may request a DCI configuration change. If there is one DCI configured per TCI-state, then according to step 4, the system may enter the PDCCH beam alignment procedure per DCI configuration, as described in Figure 6.

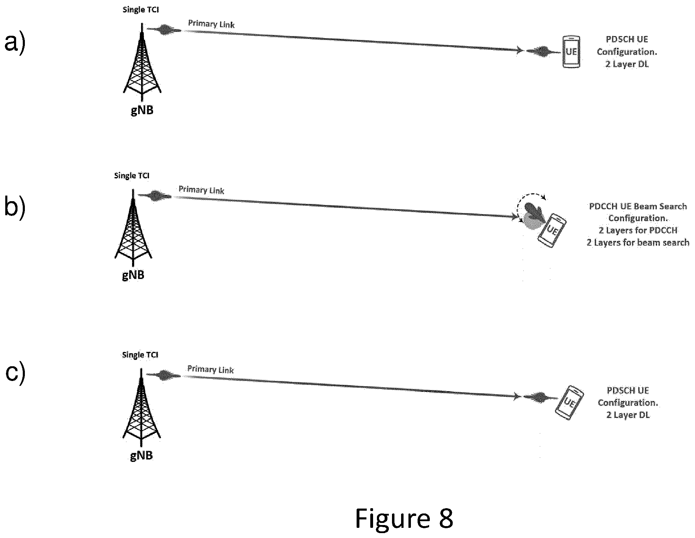

The proposed procedure is not only applicable to 4-layer DL MIMO use case but is also advantageous in 2-layer single-TCI use case to enable UE to refine its beam without needing CSI-RS repetition 'ON'. The procedure is illustrated in Figure 8 for a single primary link use case (2-Layer DL). Figure 8a illustrates a UE connected and beam aligned to a network node using the best primary link and environment only supports that primary link. However, as the UE rotates, it will need to realign its beam for optimal performance. However, as the UE is dependent on the network node scheduling sufficient aperiodic CSI-RS with repetition "ON" at the right time for the UE to scan the full angular space of the panel (all supported narrow beams). This increases the number of allocated aperiodic CSI-RS with repetition "ON" and thereby also the overhead. Especially since the network node will not know that the UE is rotating and will have to allocated aperiodic CSI-RS with repetition "ON" with a proper interval.

Figure 8b highlights a further example where the UE is configured to use a single element wide beam for a first set of DL-Layers to receive and decode the PDCCH message. The UE will configure the remaining elements of the panel with a second set of DL-Layers with a narrow beam in a preselected angular direction. The UE will keep using the static single element broad beam to receive and decode the PDCCH, while at the same time configuring a dynamic narrow beam in different angular directions. This will enable the UE to gradually monitor the full angular space for the panel to locate and maintain its primary link. This is achieved without any use of aperiodic CSI-RS with repetition "ON".

Figure 8c shows the UE fully aligned to the primary link utilizing the full panel. Therefore, the approach reduces resource overhead for UE beam refinement, i.e. by minimizing or avoid scheduling aperiodic CSI-RS with repetition "ON".

### Example Apparatus

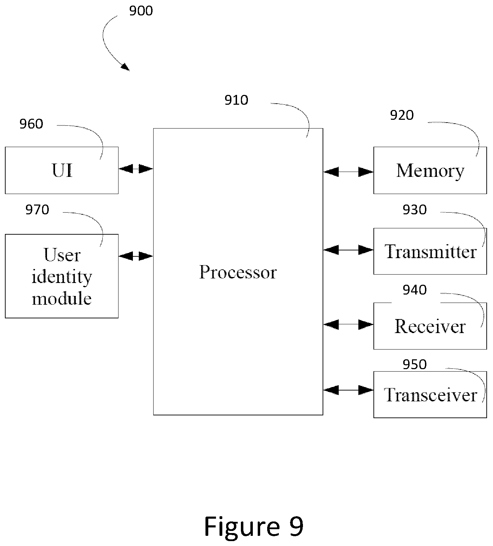

Figure 9 shows, by way of example, a block diagram of an apparatus capable of performing the method(s) as disclosed herein. Illustrated is device 900, which may comprise, for example, a mobile communication device such as mobile 100 of Figure 1. Comprised in device 900 is processor 910, which may comprise, for example, a single- or multi-core processor wherein a single-core processor comprises one processing core and a multi-core processor comprises more than one processing core. Processor 910 may comprise, in general, a control device. Processor 910 may comprise more than one processor. Processor 910 may be a control device. A processing core may comprise, for example, a Cortex-A8 processing core manufactured by ARM Holdings or a Steamroller processing core designed by Advanced Micro Devices Corporation. Processor 910 may comprise at least one Qualcomm Snapdragon and/or Intel Atom processor. Processor 910 may comprise at least one application-specific integrated circuit, ASIC. Processor 910 may comprise at least one field-programmable gate array, FPGA. Processor 910 may be means for performing method steps in device 900. Processor 910 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 900 may comprise memory 920. Memory 920 may comprise random-access memory and/or permanent memory. Memory 920 may comprise at least one RAM chip. Memory 920 may comprise solid-state, magnetic, optical and/or holographic memory, for example. Memory 920 may be at least in part accessible to processor 910. Memory 920 may be at least in part comprised in processor 910. Memory 920 may be means for storing information. Memory 920 may comprise computer instructions that processor 910 is configured to execute. When computer instructions configured to cause processor 910 to perform certain actions are stored in memory 920, and device 900 overall is configured to run under the direction of processor 910 using computer instructions from memory 920, processor 910 and/or its at least one processing core may be considered to be configured to perform said certain actions. Memory 920 may be at least in part external to device 900 but accessible to device 900.

Device 900 may comprise a transmitter 930. Device 900 may comprise a receiver 940. Transmitter 930 and receiver 940 may be configured to transmit and receive, respectively, information in accordance with at least one cellular or non-cellular standard. Transmitter 930 may comprise more than one transmitter. Receiver 940 may comprise more than one receiver. Transmitter 930 and/or receiver 940 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 900 may comprise a near-field communication, NFC, transceiver 950. NFC transceiver 950 may support at least one NFC technology, such as NFC, Bluetooth, Wibree or similar technologies.

Device 900 may comprise user interface, UI, 960. UI 960 may comprise at least one of a display, a keyboard, a touchscreen, a vibrator arranged to signal to a user by causing device 900 to vibrate, a speaker and a microphone. A user may be able to operate device 900 via UI 960, for example to accept incoming telephone calls, to originate telephone calls or video calls, to browse the Internet, to manage digital files stored in memory 920 or on a cloud accessible via transmitter 930 and receiver 940, or via NFC transceiver 950, and/or to play games.

Device 900 may comprise or be arranged to accept a user identity module 970. User identity module 970 may comprise, for example, a subscriber identity module, SIM, card installable in device 900. A user identity module 970 may comprise information identifying a subscription of a user of device 900. A user identity module 970 may comprise cryptographic information usable to verify the identity of a user of device 900 and/or to facilitate encryption of communicated information and billing of the user of device 900 for communication effected via device 900.

Processor 910 may be furnished with a transmitter arranged to output information from processor 910, via electrical leads internal to device 900, to other devices comprised in device 900. Such a transmitter may comprise a serial bus transmitter arranged to, for example, output information via at least one electrical lead to memory 920 for storage therein. Alternatively to a serial bus, the transmitter may comprise a parallel bus transmitter. Likewise processor 910 may comprise a receiver arranged to receive information in processor 910, via electrical leads internal to device 900, from other devices comprised in device 900. Such a receiver may comprise a serial bus receiver arranged to, for example, receive information via at least one electrical lead from receiver 940 for processing in processor 910. Alternatively to a serial bus, the receiver may comprise a parallel bus receiver.

Processor 910, memory 920, transmitter 930, receiver 940, NFC transceiver 950, UI 960 and/or user identity module 970 may be interconnected by electrical leads internal to device 900 in a multitude of different ways. For example, each of the aforementioned devices maybe separately connected to a master bus internal to device 900, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments maybe implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:
means for splitting an antenna system of a user equipment into a wide beam portion and a narrow beam portion;
means for receiving, at the user equipment from a network node, a first set of downlink reference signals, wherein the wide beam portion of the antenna system receives the first set of downlink reference signals;
means for controlling the narrow beam portion of the antenna system to scan through various angular directions to search for a second set of downlink reference signals;
means for receiving, at the user equipment from the network node, the second set of downlink reference signals, wherein the narrow beam portion of the antenna system receives the second set of downlink reference signals.

2. The apparatus of claim 1, wherein:
the antenna system comprises an antenna array comprising a plurality of antenna elements;
the wide beam portion of the antenna system comprises a single element of the antenna array; and
the narrow beam portion of the antenna system comprises all remaining elements of the antenna array.

3. The apparatus of claim 2, further comprising:
means for activating the single element of the antenna array to receive the first set of downlink reference signals;
means for activating all remaining elements of the array with phase shifters to receive the second set downlink reference signals.

4. The apparatus of any preceding claim, wherein the first set of downlink reference signals are received by the wide beam portion of the antenna system simultaneously to the narrow beam portion of the antenna system scanning through the different angular directions to find the second set of reference signals.

5. The apparatus of any preceding claim, further comprising:
means for receiving and decoding a physical downlink control channel of the first set of downlink reference signals.

6. The apparatus of any preceding claim, further comprising:
means for receiving and decoding a physical downlink control channel of the second set of downlink reference signals;
means for measuring and storing a received power of the second set of downlink reference signals.

7. The apparatus of claim 6, further comprising
means for determining an optimum beam alignment based on the measured and stored received power of the second set of downlink reference signals.

8. The apparatus of any preceding claim, further comprising:
means for determining whether to split the antenna system into the wide beam portion and the narrow beam portion, comprising:
means for performing measurements on downlink reference signals received by a narrow beam configuration of the antenna system to determine a parameter;
means for determining whether the parameter meets a predetermined threshold value.

9. The apparatus of claim 8, wherein the parameter comprises a channel quality indicator and/or a power headroom level.

10. The apparatus of claim 9, wherein the channel quality indicator is related to a signal to noise ratio of the received downlink reference signals.

11. The apparatus of claims 9 or 10, wherein the power headroom level is related to power available power available in transmission of candidate uplink signals.

12. The apparatus of any preceding claim, wherein
the network node is configured into a single transmission configuration indicator, TCI, state such that the first set of downlink reference signals and the second set of downlink reference signals originate from a single primary reference signal; and
the first set of downlink reference signals and the second set of downlink reference signals are received at the user equipment from a single or multiple different angular directions.

13. The apparatus of any preceding claim, wherein
the network node is configured into a dual TCI state such that the first set of downlink reference signals and the second set of downlink reference signals originate from different primary reference signals; and
the first set of downlink reference signals and the second set of downlink reference signals are received at the user equipment from a single or multiple different angular directions.

14. A method comprising:
splitting an antenna system of a user equipment into a wide beam portion and a narrow beam portion;
receiving, at the user equipment from a network node, a first set of downlink reference signals, wherein the wide beam portion of the antenna system receives the first set of downlink reference signals;
controlling the narrow beam portion of the antenna system to scan through various angular directions to search for a second set of downlink reference signals;
receiving, at the user equipment from the network node, the second set of downlink reference signals, wherein the narrow beam portion of the antenna system receives the second set of downlink reference signals.

15. A computer program comprising instructions which, when executed by an apparatus, cause the apparatus to:
split an antenna system of a user equipment into a wide beam portion and a narrow beam portion;
receive, at the user equipment from a network node, a first set of downlink reference signals, wherein the wide beam portion of the antenna system receives the first set of downlink reference signals;
control the narrow beam portion of the antenna system to scan through various angular directions to search for a second set of downlink reference signals;
receive, at the user equipment from the network node, the second set of downlink reference signals, wherein the narrow beam portion of the antenna system receives the second set of downlink reference signals.
